# EUROPEAN PATENT APPLICATION

(11) **EP 4 664 286 A1**
(43) Date of publication of application: **17.12.2025**
(21) Application number: 25167283.8
(22) Date of filing: 31.03.2025
(51) Int. Cl.: G06F 9/50, G06F 11/36

(54) **CLOUD-BASED POLICY DEFINITION AND ENFORCEMENT**

(30) Priority: 01.04.2024 US 202418623716
(71) Applicant: Google LLC, Mountain View, CA 94043 (US)
(72) Inventor: PANNALA, Lalitha Visali, 560016 Bengaluru, Karnataka (IN); JOSE, Johnson, 560016 Bengaluru, Karnataka (IN)
(74) Representative: Betten & Resch

(57) **Abstract**

Aspects of the disclosed technology include techniques and mechanisms for cloud-based policy definition and enforcement. Using a policy manager platform, entities associated with a tenant within a multi-tenant cloud environment define a policy and submit the policy for approval. The policy manager platform deploys the pending policy in a test environment for analysis by one or more entities associated with the tenant. The policy manager platform generates a pending policy protype for deployment in a subscriber environment. Policy manager platform receives an indication that the pending policy changed from a pending state to an active state based on policy performance analysis in both the test environment and the subscriber environment. Based on receiving the indication, the policy manager platform pushes the active policy to relevant policy subscribers associated with the tenant.

## Description

### BACKGROUND

A policy outlines one or more actions and/or rules that are triggered when one or more conditions are met. Policies have applications to different domains, but might not be visible and/or accessible by different teams within a domain. Traditionally, policies have been hard-wired into code or, in some instances, have been defined using external configuration files that are associated with a particular domain. The policies may be defined by program managers and/or engineers that manage the policies for a domain. Therefore, a policy might not be readily accessible and/or visible to teams that did not participate in defining the policy. Consequently, current methods for providing policy structure, visibility, accessibility, and policy change management lack consistency and standardization.

### SUMMARY

Aspects of the disclosed technology include methods, apparatuses, systems, and computer-readable media for cloud-based policy definition and enforcement. Using a policy manager platform, teams associated with a tenant of a multi-tenant cloud environment define a policy and submit the policy for approval. Policy approvers initiate a multi-level policy approval workflow to analyze the policy and to determine whether to approve or reject the policy based on the analysis. An instance administrator associated with the tenant updates a tenant database to reflect newly activated policies. Further, the instance administrator initiates enforcement and protection of the policies associated with the tenant such that the tenant-specific policies are accessible only by personnel and/or teams associated with the tenant. The policy manager platform uses one or more application programming interfaces (APIs) to push the activated policies to policy subscribers associated with the tenant.

One aspect of the disclosure provides for a method for implementing policies within a multi-tenant cloud environment, the method comprising receiving, by a policy manager platform, a pending policy that is associated with a tenant of the multi-tenant cloud environment, wherein the pending policy comprises at least one action to be executed when at least one tenant-specific condition is met; deploying the pending policy in a test environment to analyze a performance of the pending policy; receiving an indication that the pending policy is approved based on the performance of the pending policy in the test environment, wherein a status of the pending policy changes from pending to active; and transmitting an active policy to a policy subscriber associated with the tenant, wherein active policies associated with the tenant are made unavailable to other tenants within the multi-tenant cloud environment.

In the foregoing instance, receiving the pending policy comprises receiving a policy definition, wherein the policy definition comprises at least one of: a policy description; an effective date of the pending policy; an expiration date of the pending policy; at least one attribute associated with the pending policy; a category that corresponds to the pending policy; or a sub-category that corresponds to the pending policy.

In foregoing instances, the test environment is a non-production test environment for testing the pending policy.

In foregoing instances, the method further comprises generating a prototype of the pending policy; exporting the prototype in a subscriber environment for testing; and monitoring the performance of the pending policy in the subscriber environment.

In foregoing instances, the method further comprises storing the active policy in a scalable database, wherein active policies associated with the tenant are made available to the policy subscriber.

In foregoing instances, the method further comprises updating the active policy based on approving one or more updates to the active policy.

In the foregoing instances, updating the active policy comprises updating a scalable database where the active policy is stored.

In foregoing instances, the method further comprises transmitting, to the policy subscriber, updates to the active policy.

In foregoing instances, the method further comprises managing requests from users within the tenant to subscribe to one or more active policies associated with the tenant.

In foregoing instances, the active policy is transmitted to the policy subscriber associated with the tenant via at least one of an application programming interface (API), an email, or a config transfer mechanism.

In foregoing instances, the method further comprises receiving a request from the policy subscriber to search for a particular active policy, wherein the request includes at least one component of a policy definition.

In foregoing instances, the method further comprises preventing duplicate policy creation based on flagging the pending policy when a metadata mapping associated with the pending policy is the same as a metadata mapping associated with the active policy.

In foregoing instances, the method further comprises reverting the active policy to a previous version of the active policy based on the active policy failing at least one performance test while deployed in the test environment.

Another aspect of the disclosure provides for a policy manager platform for implementing policies within a multi-tenant cloud environment, the policy manager platform comprising one or more processors configured to: receive a pending policy that is associated with a tenant of the multi-tenant cloud environment, wherein the pending policy comprises at least one action to be executed when at least one tenant-specific condition is met; deploy the pending policy in a test environment to analyze a performance of the pending policy; receive an indication that the pending policy is approved based on the performance of the pending policy in the test environment, wherein a status of the pending policy changes from pending to active; and transmit an active policy to a policy subscriber associated with the tenant, wherein active policies associated with the tenant are made unavailable to other tenants within the multi-tenant cloud environment.

In the foregoing instance, the one or more processors are further configured to: generate a prototype of the pending policy; export the prototype in a subscriber environment for testing; and monitor the performance of the pending policy in the subscriber environment.

In the foregoing instances, the one or more processors are further configured to prevent duplicate policy creation based on flagging the pending policy when a metadata mapping associated with the pending policy is the same as a metadata mapping associated with the active policy.

In the foregoing instances, the one or more processors are further configured to revert the active policy to a previous version of the active policy.

Another aspect of the disclosure provides for a non-transitory computer readable storage medium storing instructions that, when executed by one or more processors for implementing policies within a multi-tenant cloud environment, cause the one or more processors to: receive a pending policy that is associated with a tenant of the multi-tenant cloud environment, wherein the pending policy comprises at least one action to be executed when at least one tenant-specific condition is met; deploy the pending policy in a test environment to analyze a performance of the pending policy; receive an indication that the pending policy is approved based on the performance of the pending policy in the test environment, wherein a status of the pending policy changes from pending to active; and transmit an active policy to a policy subscriber associated with the tenant, wherein active policies associated with the tenant are made unavailable to other tenants within the multi-tenant cloud environment.

In the foregoing instance, receiving the pending policy causes the one or more processors to receive a policy definition, wherein the policy definition comprises at least one of: a policy description; an effective date of the pending policy; an expiration date of the pending policy; at least one attribute associated with the pending policy; a category that corresponds to the pending policy; or a sub-category that corresponds to the pending policy.

In the foregoing instances, the test environment is a non-production test environment for testing the pending policy.

### BRIEF DESCRIPTION OF THE DRAWINGS

FIG. 1A illustrates an example multi-tenant cloud environment for cloud-based policy definition and enforcement, in accordance with aspects of the disclosure.
FIG. 1B illustrates an example policy manager platform for cloud-based policy definition and enforcement, in accordance with aspects of the disclosure.
FIG. 2 illustrates an example interaction between a policy author and the policy manager platform for cloud-based policy definition and enforcement, in accordance with aspects of the disclosure.
FIG. 3 illustrates an example user interface for cloud-based policy definition and enforcement, in accordance with aspects of the disclosure
FIG. 4 illustrates an example interaction between a policy approver and the policy manager platform for cloud-based policy definition and enforcement, in accordance with aspects of the disclosure.
FIG. 5 illustrates an example interaction between an instance administrator and the policy manager platform for cloud-based policy definition and enforcement, in accordance with aspects of the disclosure.
FIG. 6 illustrates an example interaction between policy subscribers and the policy manager platform for cloud-based policy definition and enforcement, in accordance with aspects of the disclosure.
FIG. 7 illustrates an example interaction between a policy approver and the policy manager platform for cloud-based policy definition and enforcement, in accordance with aspects of the disclosure.
FIG. 8 illustrates a flow diagram for an example method for cloud-based policy definition and enforcement, in accordance with aspects of the disclosure.
FIG. 9 illustrates a block diagram of an example computing environment for cloud-based policy definition and enforcement, in accordance with aspects of the disclosure.

### DETAILED DESCRIPTION

Aspects of the disclosed technology include techniques and mechanisms for cloud-based policy definition and enforcement. Using a policy manager platform, entities associated with a tenant within a multi-tenant cloud environment define a policy and submit the policy for approval. The policy manager platform deploys the pending policy in a test environment for analysis by one or more entities associated with the tenant. The policy manager platform generates a pending policy protype for deployment in a subscriber environment. Policy manager platform receives an indication that the pending policy changed from a pending state to an active state based on policy performance analysis in both the test environment and the subscriber environment. Based on receiving the indication, the policy manager platform pushes the active policy to relevant policy subscribers associated with the tenant.

The technology described herein addresses a policy manager platform that provides centralized storage of policies, thresholds, and service level objectives (SLOs) that are used to manage resources within a multi-tenant cloud environment and to enforce data security. The policy manager platform provides a transparent and streamlined environment within which policies are authored, approved, stored, searched, and implemented across domains. The policy manager platform determines whether to approve pending policies using a chain of policy approval. The chain of policy approval analyzes the performance of a pending policy in different test environments, such as a non-production test environment or a subscriber environment. The policy manager platform, based on approving a pending policy, changes the state of the policy from pending to active, and transmits the active policy to policy subscribers within a tenant of the multi-tenant cloud environment. The policy manager platform facilitates the transparency of pending and active policies associated with a tenant by providing, for each tenant, a listing of policies. The policy manager platform manages requests from users associated with a tenant to subscribe to one or more active policies. The policy manager platform ensures that policies associated with each tenant are made unavailable to other tenants within the multi-tenant cloud environment.

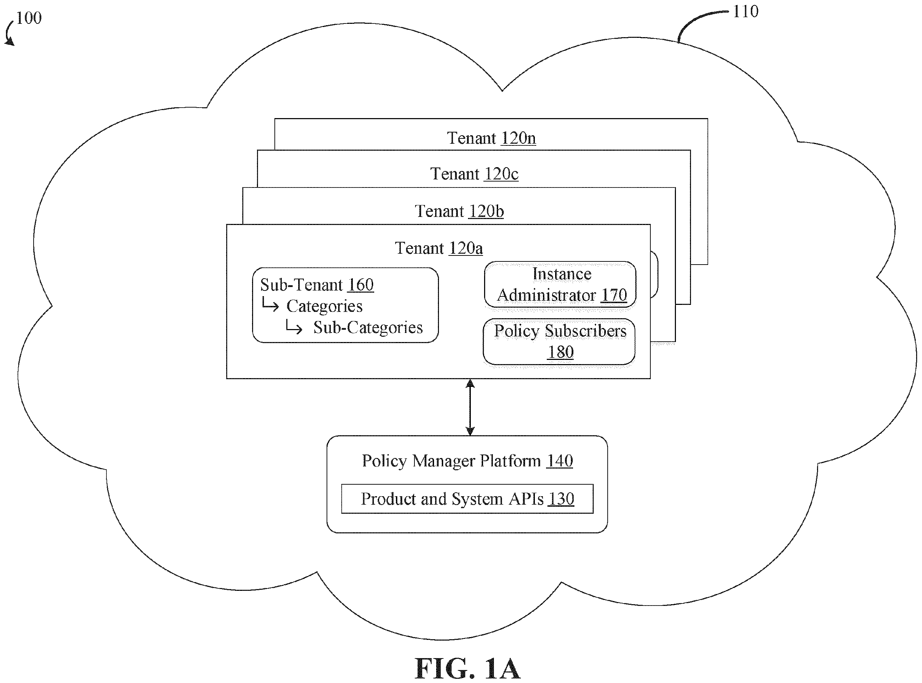

The policy manager platform communicates with one or more tenants within a multi-tenant cloud environment. FIG. 1A illustrates an example multi-tenant cloud environment for cloud-based policy definition and enforcement. As illustrated in FIG. 1A, example multi-tenant cloud environment 100 includes cloud network 110 that is configured to host one or more tenants and the policy manager platform. While FIG. 1A indicates that cloud network 110 hosts tenants 120a-120n, cloud network 110 can host more or fewer tenants. Further, tenants 120a-120n are collectively referred to herein as tenant 120 and tenant 120 corresponds to any one of tenants 120a-120n.

Tenant 120 is a web-based service and/or application that is offered by an enterprise organization, such as electronic mail services, cloud storage services, navigation services, web browsing services, or the like. Each of tenants 120a-120n may correspond to different web-based services that are offered by different enterprise organizations. Sub-tenant 160 of tenant 120 is a related feature and/or sub-service of the service that is offered by the enterprise organization. Sub-tenants 160 may further decompose tenant 120 using increasing levels of granularity. For example, where tenant 120 is a cloud storage service, sub-tenant 160 may be a cloud capacity management service and/or cloud capacity management feature. Sub-tenant 160 may be comprised of one or more categories and sub-categories. A category corresponds to more granular services and/or features of sub-tenant 160 and a sub-category corresponds to more granular services and/or features of the category. For example, in instances where the tenant is a cloud storage service and the sub-tenant is a cloud capacity management feature, a category of the sub-tenant may be surplus management and the sub-category may be cloud capacity surplus management.

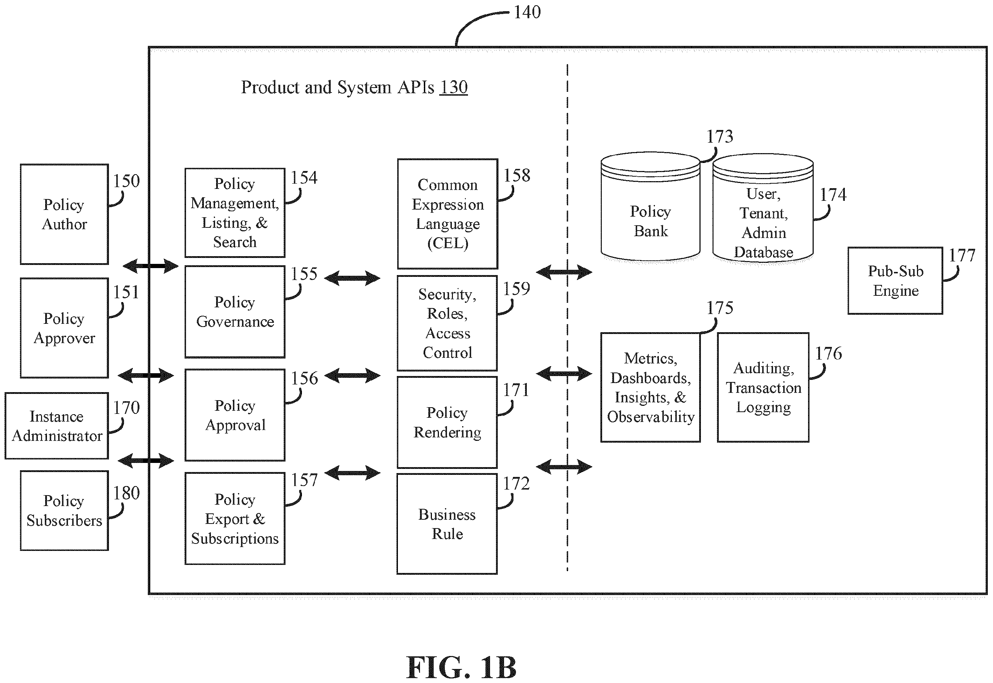

Tenant 120 is associated with different teams that each consist of enterprise organization personnel. Specific teams may manage specific features and/or sub-services offered by tenant 120. For example, a cloud storage services team may include one or more engineers and one or more management personnel that produce and manage cloud storage functionality. As discussed in connection with FIG 1B, personnel affiliated with a team may submit one or more policies to the policy platform manager for review and enforcement.

As illustrated in FIG. 1A, tenant 120 further includes instance administrator 170. Instance administrator 170 safeguards all data that is specific to tenant 120 from unauthorized access and separates each tenant's users, policies, and configurations from other tenants within multi-tenant cloud environment 100. Tenant-specific data includes, at least, policies associated with tenant 120, metadata that corresponds to the policies associated with tenant 120, policies associated with sub-tenant 160, metadata that corresponds to the policies associated with sub-tenant 160, and a list of policy subscribers (referred to herein as policy subscribers 180). In some instances, the metadata that corresponds to either one of tenant 120 or sub-tenant 160 may identify one or more policy authors as well as one or more policy approvers. Each policy author and policy approver may be assigned a level of security clearance, a role that indicates a level of security clearance, and/or specific access controls. For example, specific access controls indicate operations that a policy author, a policy approver, and the instance administrator can perform on one or more sections of policy bank 173 that correspond to the tenant to which the policy author, policy approver, or instance administrator belongs. Instance administrator 170 uses the metadata to determine whether to grant access to tenant-specific data.

Instance administrator 170 is further configured to manage current policy subscriptions and to process policy subscription requests. In some instances, the instance administrator 170 manages requests to subscribe/unsubscribe to/from a specific policy, requests to subscribe/unsubscribe to/from a category of policies, or requests to subscribe/unsubscribe to/from a sub-category of policies. Instance administrator 170 further manages requests from policy subscribers 180 associated with tenant 120 to subscribe to one or more active policies.

As further illustrated in FIG. 1A, tenant 120 communicates with policy manager platform 140. Policy manager platform 140 uses a multi-step approach for defining, approving, and propagating policies. To do so, policy manager platform 140 uses a plurality of product application programming interfaces (APIs) and system APIs, generally referred to herein as product and system APIs 130.

Policy manager platform 140 provides controlled access to applications, services, and/or features offered by the tenants within multi-tenant cloud environment 100. For example, policy manager platform 140 uses one or more control practices (e.g., alkali-based control) on users and/or subscribers that are able to access specific applications, services, and/or features so that policy manager platform 140 has a central admission tool to approve or reject access to the applications, services, and/or features offered in multi-tenant cloud environment 100. Policy manager platform 140 supports compartmentalized storage of the policies associated with each tenant within multi-tenant cloud environment 100 such that one tenant is unable to access policies associated with a different tenant. Such restrictions may be enabled for all policies and/or only sensitive policies. To provide data-level security, policy manager platform 140 uses rule-based access control (RBAC) to control policy functionality and to implement granular levels of control over the active policies. Granular levels of control may include controls over personnel that generate policies (e.g., policy author 150), controls over personnel that approve the policies (e.g., policy approver 151), controls over personnel that define policy attributes (e.g., instance administrator 170). In some instances, policy manager platform 140 uses security roles and access control API 159 to monitor every role that communicates with policy manager platform 140, such as policy approver 151, policy approver 151. Policy manager platform 140 is described in further detail in connection with FIG. 1B.

In some instances, policy manager platform 140 is configured to tailor tenant-specific instances for users associated with the tenant, such as enterprise organization personnel, policy authors, policy approvers, instance administrators, policy subscribers, or the like. Tailoring the tenant-specific instances is based on workflows and metadata that is required for policy authors (e.g., policy author 150) to create policies and for policy subscribers (e.g., policy subscribers 180) to subscribe to policies.

FIG. 1B illustrates an example policy manager platform for cloud-based policy definition and enforcement. As illustrated in FIG. 1B, policy manager platform 140 communicates with different teams and/or personnel associated with tenant 120. For example, policy manager platform 140 may receive communication from and/or transmit communication to at least one of policy author 150, policy approver 151, instance administrator 170, and policy subscribers 180.

Policy author 150 may be a team member associated with one or more services and/or features under tenant 120. Policy author 150 uses one or more of product and system APIs 130 to define a policy and to submit the policy to policy manager platform 140 for review.

Policy approver 151 may be management personnel within the enterprise organization associated with tenant 120. Policy approver 151 receives the policy to be reviewed from policy manager platform 140 and uses one or more of product and system APIs 130 to determine whether to approve or reject the policy. Further, policy approver 151 uses one or more engines within policy manager platform 140 to observe approved policies and to track metrics that correspond to each approved policy.

In some instances, policy approver 151 is nominated by instance administrator 170. Policy approver 151 can review only the policies that belong to the same tenant that policy approver 151 belongs to. Policy approver 151 is designated by instance administrator 170 for approving policies in a given tenant and/or sub-tenant. Policy approver 151 can be personnel of tenant 120 (e.g., an executive, a product manager, or the like) who is proficient in a domain associated with one or more policies. Policy approver 151 is a domain expert and uses knowledge of expected business outcomes to approve or reject a policy. In some instances, a policy will undergo multi-level approval by a team of policy approvers. In such instances, approval is needed from each policy approver before the state of the policy changes from "pending" to "active". In some instances, policy approver 151 is management personnel and/or one or more engineers associated with tenant 120.

Instance administrator 170 performs policy governance and security, such as defining at least one of a policy author or a policy approver for a tenant and/or sub-tenants within multi-tenant cloud environment 100. In some instances, instance administrator 170 receives from policy manager platform 140 instructions to perform policy governance using rule-based access control (RBAC).

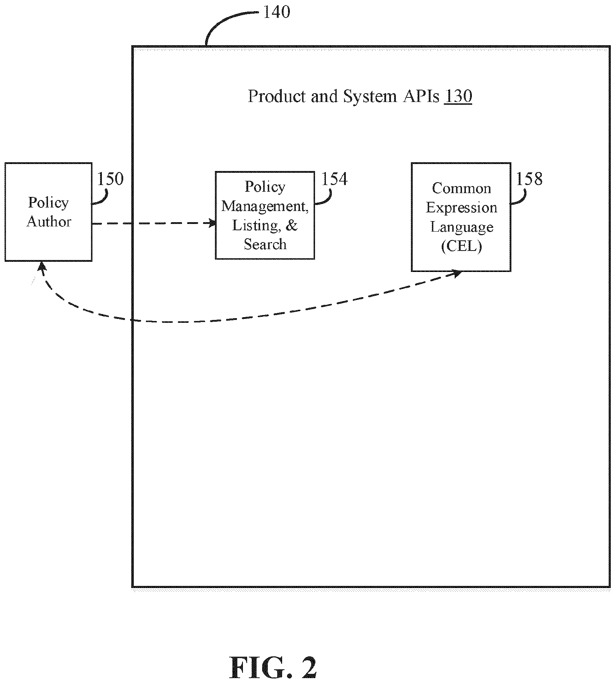

Policy subscribers 180 may receive communication from policy manager platform 140, or from at least one of the APIs and engines operating therein, indicating subscription notifications, policy updates, or the like. The interaction between policy manager platform 140 and each of policy author 150, policy approver 151, instance administrator 170, and policy subscriber is discussed in detail in connection with FIGS. 2-7.

FIG. 2 illustrates an example interaction between policy author 150 and policy manager platform 140 for cloud-based policy definition and enforcement. Policy author 150 is a member of at least one team that produces and/or manages features and services associated with tenant 120. Policy author 150 defines one or more policies using at least one API within policy manager platform 140. In particular, policy author 150 uses common expression language (CEL) API 158 to define a policy. In some instances, policy management, listing, and search API 154 supports CEL API 158 during the instantiation of a policy and the process of defining one or more policy attributes, events, or rules. Rules are triggered based on the occurrence of a tenant-specific event. For example, when an attribute of tenant 120 changes to a preset value, a rule sets the value of the attribute. A rule is different from a policy in that the rule does not have different versions and, as such, does not require version control, approval flow, and/or a definition of an event that triggers application of the rule. Rule engines, such as business rule API 172, are typically for system resources or are mathematical in nature.

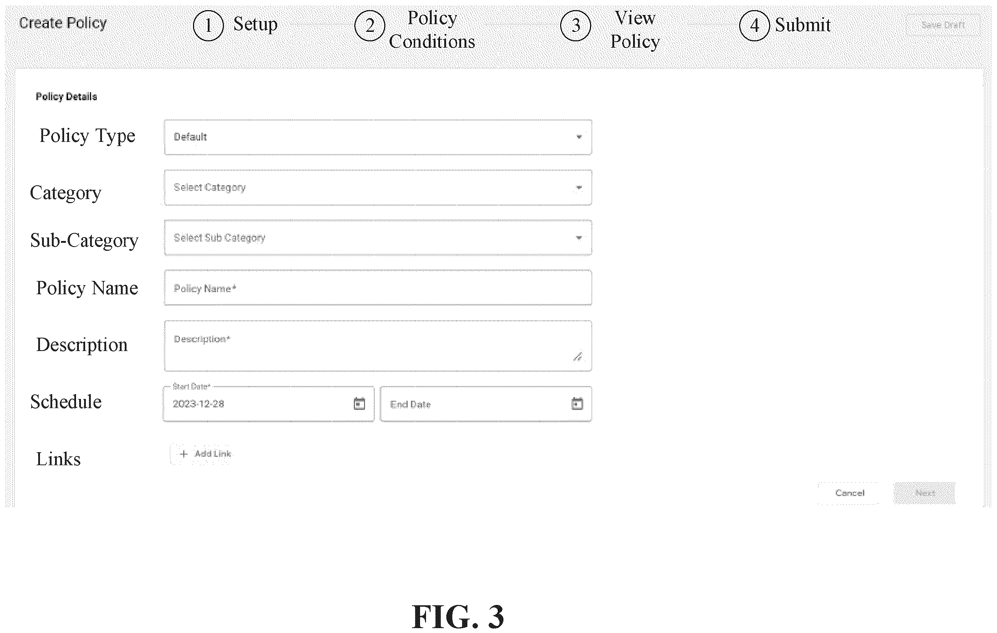

FIG. 3 illustrates an example user interface for cloud-based policy definition and enforcement. In particular, FIG. 3 illustrates an example interface of CEL API 158 that policy author 150 can use to define a policy. As illustrated in FIG. 3, policy author 150 defines a new policy using a plurality of fillable text fields, such as a policy type, a policy name, a policy description, an effective date of the policy, an anticipated policy expiration date, a corresponding policy category and subcategory, one or more metrics corresponding to the policy, and one or more tags that can be used to locate the policy using a policy search feature. The policy search feature allows users, subscribers, and/or tenant personnel to search for a policy using at least a policy name, a policy author, a category that corresponds to the policy, a sub-category that corresponds to the policy, or the like. The results of the policy search may be presented to the user, subscriber, and/or tenant personnel in different forms. For example, the results may be presented through one of product and system APIs 130 or may be exported from the user interface as protos. In some instances, the results are presented as frontend implementations, such as a user interface that is specific to the associated tenant, such as tenant 120.

Using policy manager platform 140, the policy author 150 can select a policy complexity, the selection of which causes the policy manager platform 140 to present relevant policy generation options. Policy author 150 uses common expression language (CEL) to perform expression building and to evaluate the policy based on policy attributes. In some instances, policy author 150 may define policies that are specific to operations executed by tenant 120 of the multi-tenant cloud environment. For example, if tenant 120 is an enterprise organization offering cloud storage services, then policy author 150 can use CEL to define policies that target operations that may affect the enterprise organization's cloud storage consumers.

In some instances, policy author 150 defines the policy using text only inputs that capture one or more policy conditions. Additionally or alternatively, policy author 150 may define the policy using events (inputs) and rules (outputs). To do so, policy author 150 uses policy management, listing, and search API 154 to add and/or edit policies using, for example, at least addPolicy () and/or editPolicy() functions. Policy author 150 selects a default policy type prior to populating the relevant policy fields within policy management, listing, and search API 154. Selecting the default policy type prompts policy management, listing, and search API 154 to present additional fillable policy fields, including conditions and actions. The conditions are those that should be satisfied for the policy to be triggered. During implementation, one or more actions are executed when the conditions are satisfied. Therefore, policy author 150 also defines the one or more actions to be executed when the conditions are satisfied. In some instances, policy author 150 indicates the conditions to be satisfied and the actions to be executed when the conditions are satisfied using conditional language of one or more programming languages. Policy author 150 submits the policy to policy manager platform 140 for further processing. Policy manager platform 140 stores the pending policy within policy bank 173 based on receiving the policy from policy author 150.

Policy manager platform 140 prevents policy author 150 from creating duplicate policies. Further, for each tenant within multi-tenant cloud environment 100, policy manager platform 140 prevents policy authors from creating conflicting policies and/or policies with competing interests. For example, policy manager platform 140 alerts policy author 150 when a draft policy has at least one of the same name as an active policy, same description, and/or same policy conditions. Further, policy manager platform 140 alerts policy author 150 when the draft policy uses the same metadata mapping as that of an active policy. In such instances, policy manager platform 140 lists the active policies that use the same metadata mapping and prompts policy author 150 to revise the draft policy.

Policies that are defined via policy management, listing, and search API 154 are submitted to policy manager platform 140 for review. In particular, policies that are defined using policy management, listing, and search API 154 are added to a policy review queue within policy manager platform 140. Policies that are awaiting review remain in a "pending" state while in the policy review queue. The policy review queue is accessible to policy approver 151. Policy approver 151 parses the policy review queue to select a policy for review. In some instances, policy approver 151 receives an invitation from policy manager platform 140 to review one or more policies in the policy review queue. Policy approver 151 may review only the policies that are affiliated with the tenant with which policy approver 151 is associated. Further, policy approver 151 may review only the policies that correspond to the feature and/or service for which policy approver 151 is a team member.

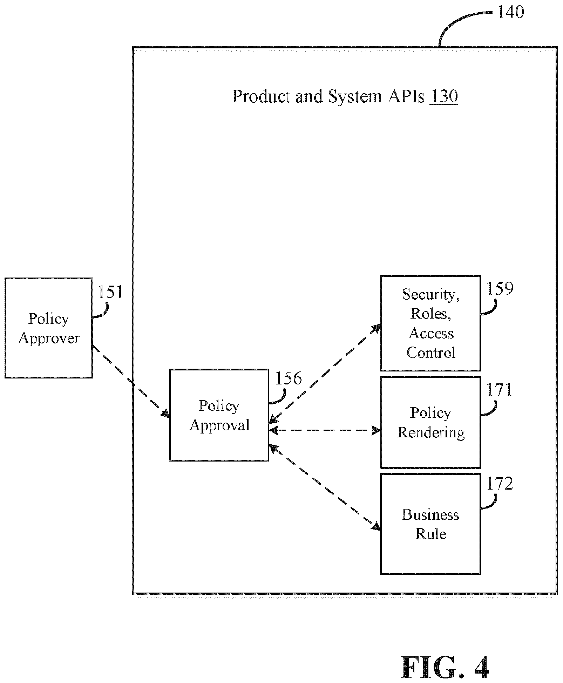

FIG. 4 illustrates an example interaction between policy approver 151 and policy manager platform 140 for cloud-based policy definition and enforcement. Policy approver 151 approves policies using at least one API within policy manager platform 140. In particular, policy approver 151 uses policy approval API 156 in connection with policy rendering API 171 and business rule API 172. In some instances, electing policy approval API 156 triggers policy manager platform 140 to provide the policy review queue to policy approver 151 so that point policy approver 151 may elect a pending policy for review.

Policy approver 151 analyzes the policy to determine whether it should be approved and propagated to policy subscribers 180, or rejected. Policy approver 151 uses one or more approval controls via one or more APIs to analyze the pending policy.

Further, policy approver 151 uses one or more policy rendering mechanisms available within policy rendering API 171 to simulate the use of a policy within tenant 120. For example, policy approver 151 can use a CDPush policy rendering mechanism to simulate use of the policy. For example, when policy approver 151 uses the CDPush policy rendering mechanism, policy manager platform 140 generates a non-production test environment within which policy approver 151 can further analyze the policy. For example, policy approver 151 may use the CDPush policy rendering mechanism to deploy the policy in the non-production test environment for further configuration and testing. Within the non-production test environment, policy approver 151 observes the simulated use of the policy within tenant 120 to determine whether the policy satisfies one or more enterprise organization objectives, enterprise organization goals, enterprise organization rules, or the like. In some instances, policy manager platform 140 prompts policy approver 151 to launch business rule API 172 to analyze the policy against the enterprise organization objectives, goals, and rules to which the policy is directed. In some instances, policy approver 151 uses business rule API 172 to define enterprise organization objectives, goals, and rules against that should be used during review of pending policies.

Further, when policy approver 151 selects the CDPush policy rendering mechanism, policy manager platform 140 generates a prototype of the policy. In some instances, policy approver 151 instructs the CDPush policy rendering mechanism to generate a prototype of the pending policy that can be exported into a subscriber environment. Policy approver 151 may also use the CDPush policy rendering mechanism to export the prototype in the non-production test environment. Policy approver 151 monitors the performance of the pending policy in at least one of the non-production test environment and/or the subscriber environment.

When deployed in at least one of the non-production test environment or the subscriber environment, policy approver 151 determines whether the simulated enforcement of the policy satisfies one or more of the defined enterprise organization objectives, goals, rules, and/or expected outcomes. In some instances, policy approver 151 is a part of a team of policy approvers. Each policy approver on the team produces a policy evaluation and indicates whether the policy should be approved. The policy evaluations of the team of policy approvers (or the policy evaluation by policy approver 151 if policy approver 151 is not on a team) are verified prior to deciding whether to release the policy into production. Verification of the evaluations is executed on a consumer side of at least one of the non-production test environment or the subscriber environment using sample data generated within either environment. The outcome of the verification is further tested and analyzed for accuracy.

Policy approver 151 considers both the performance of the policy in the non-production test environment and the performance of the policy prototype in the subscriber environment to determine whether to approve the policy. In some instances, policy approver 151 approves the policy based at least on a performance analysis of the policy or a simulated enforcement analysis of the policy. When the policy is approved, the state of the policy changes from "pending" to "active." In instances where the policy is approved or approved and enabled, policy approver 151 instructs policy manager platform 140 to update the status of the policy from "pending" to "active". Policy approver 151 may approve the policy, but not activate the policy. The policy is approved but not activated when the policy is defined for an upcoming event (e.g., a public gathering such as a festival) and should not be active yet. In some instances, policy approver 151 defines the policy for later integration to ensure that the policy is documented, but not yet operational. Further, in some instances, the policy remains approved but inactive when an updated version of the policy is currently active.

In some instances, policy approver 151 rejects the policy. When the policy is rejected, the state of the policy changes from "pending" to "rejected." In instances where the policy is rejected, policy approver 151 instructs policy manager platform 140 to update the status of the policy from "pending" to "rejected". When the policy is rejected, policy manager platform 140 notifies policy author 150 of the rejection. Policy author 150 may revise the policy and re-submit the policy for approval. If the revised policy is not approved, the revised policy remains in the rejected state. In the rejected state, the policy is not offered to users of tenant 120 and the policy remains inactive. In some instances, policy manager platform 140 deletes policies that are in the "rejected" state, a "drafted" state, or a "pending" state.

When a decision is made on whether to approve or reject the policy, policy manager platform 140 notifies instance administrator 170 of the decision. Based on receiving a notification from policy manager platform 140, instance administrator 170 uses one or more APIs within policy manager platform 140 to enforce the policy.

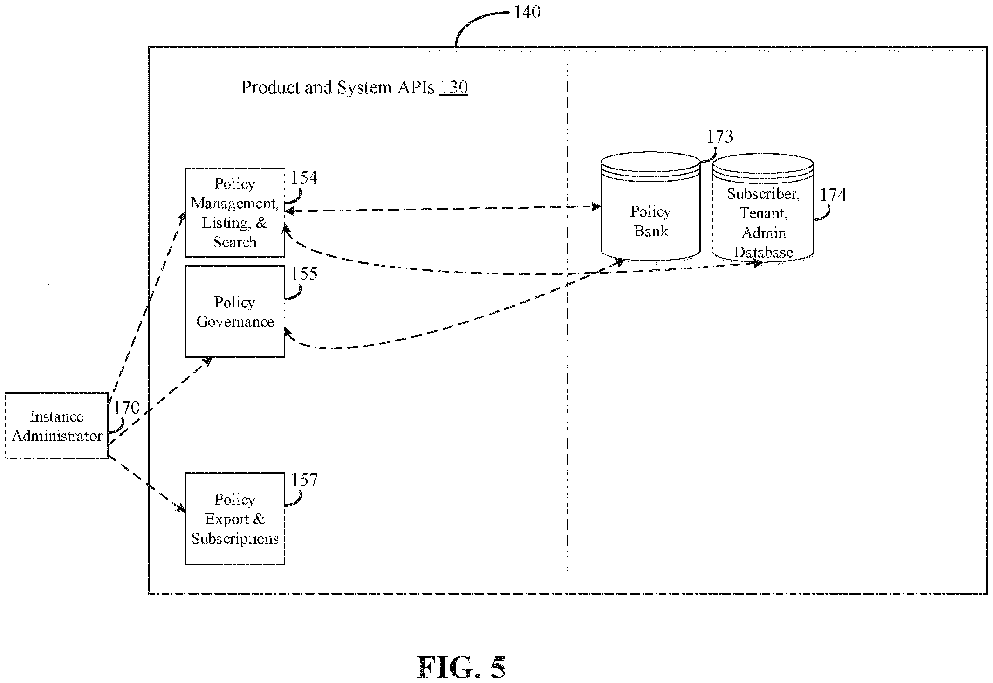

FIG. 5 illustrates an example interaction between instance administrator 170 and policy manager platform 140 for cloud-based policy definition and enforcement. When the policy is approved, policy manager platform 140 uses policy management, listing, and search API 154 to add the newly approved policy to a repository of policies that are active within tenant 120. Policy manager platform 140 allows personnel associated with tenant 120 and/or subscribers of tenant 120 to search the list of active policies within policy bank 173 using a policy search feature that is supported on the platform. Policy bank 173 may be a scalable data structure, such as a Spanner-based database, associated with policy manager platform 140.

Policy bank 173 stores a totality of policies that correspond to each tenant of multi-tenant cloud environment 100. Policy bank 173 may be compartmentalized such that policies associated with a first tenant, such as tenant 120a, are separated from policies associated with the remainder of tenants within the multi-tenant cloud environment, such as tenants 120b-120n. Instance administrator 170 is configured to ensure the policies associated with tenant 120 (or tenant 120a) remain separate from those of other tenants. To do so, instance administrator 170 uses policy governance API 155.

In some instances, policy manager platform 140 uses policy governance API 155 to implement different security controls to provide service-level security (or application-level security) and data-level security. To provide service-level security, policy manager platform 140 provides for controlled access to the services and/or features offered by tenant 120 and product and system APIs 130 within policy manager platform 140. For example, product and system APIs 130 may be enabled for usage within specific groups only, such as groups that implement authentication mechanisms for enforcing RBAC. Such groups are used to authenticate users for the roles of policy author 150, policy approver 151, or the like. When the user enters login credentials using product and system APIs 130, permissions are granted based on the role of the user. For example, role-based user permissions may include one or more policy actions, such as viewing policies, editing policies, deleting policies, approving policies, modifying policy versions, modifying policy subscriptions, or the like.

Instance administrator 170 uses policy governance API 155 to monitor active policies to ensure that active policies remain within the appropriate sections of policy bank 173, such as the sections that are dedicated to the tenant to which the active policies correspond. Further, using policy governance API 155, instance administrator 170 handles requests to access policies, requests to edit policies, requests to review active policies, or the like. Instance administrator 170 analyzes each request using data stored in subscriber, tenant, admin database 174, which stores the metadata that corresponds to the policies associated with tenant 120, the metadata that corresponds to the policies associated with sub-tenant 160, and data identifying policy subscribers 180. The metadata that corresponds to the policies associated with either tenant 120 or sub-tenant 160 may indicate teams to which the policies correspond. Further, the metadata may indicate permissions associated with the teams to which the policies correspond. Upon receipt of a request, instance administrator 170 uses the metadata to determine whether the requestor is permitted to access, edit, and/or review the requested policy. In some instances, instance administrator 170 uses the metadata to determine, for example, whether the requestor is associated with tenant 120 and/or whether the requestor is affiliated with the team to which the policy corresponds to ensure that the data in policy bank 173 is not accessed by personnel external to tenant 120. Instance administrator 170 uses policy export and subscriptions API 157 to trigger policy manager platform 140 to transmit policy updates to policy subscribers 180.

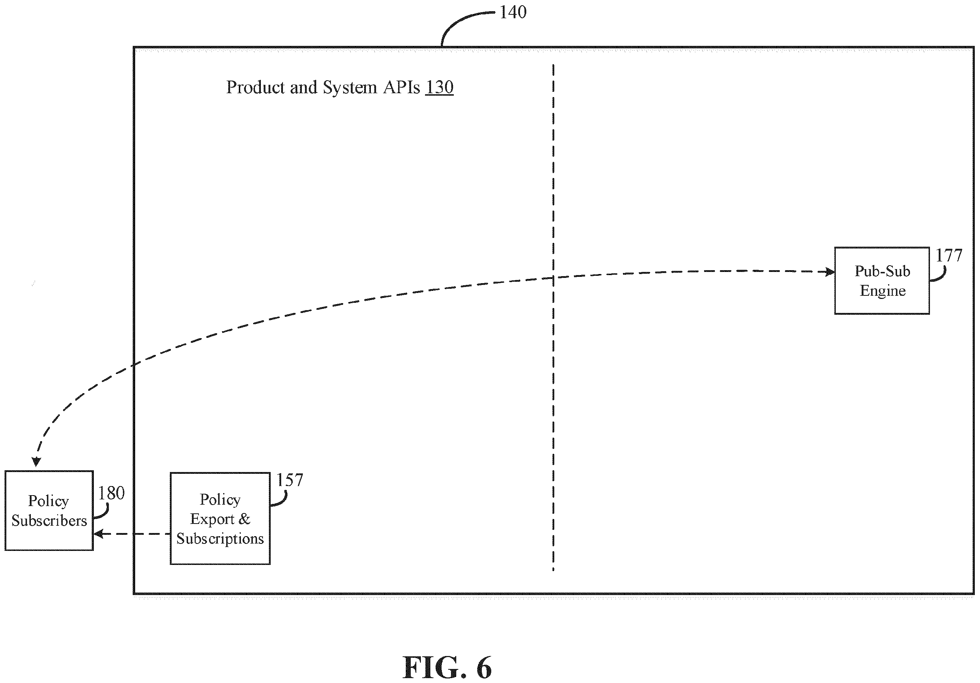

FIG. 6 illustrates an example interaction between policy subscribers 180 and policy manager platform 140 for cloud-based policy definition and enforcement. Policy manager platform 140 receives a notification via policy export and subscriptions API 157 indicating, at least, that policy bank 173 has updated, at least one new policy and/or category of policies have been added to policy bank 173, one or more subscriptions require updates in light of the one or more policies added to policy bank 173, or the like. Policy manager platform 140 updates current policy subscriptions based on the one or more changes to policy bank 173. In particular, policy manager platform 140 determines whether current subscribers are subscribed to at least a category of policies or a sub-category of policies to which one or more newly added policies also correspond. Based on determining current subscribers are subscribed to a category or sub-category of policies that was recently updated within policy bank 173, policy manager platform 140 makes the newly added policies available to the relevant portion of policy subscribers 180.

Policy subscribers 180 receive active policies from policy manager platform 140 via at least one policy export and subscriptions API 157, policy subscription notifications via tenant-specific user interfaces, a config transfer mechanism, CDPush, or the like. Policy subscribers 180 subscribe to one or more policies, one or more categories of policies, and/or one or more sub-categories of policies. When a new policy is created, policy subscribers 180 (or a portion of policy subscribers 180) who are subscribed to the policy, the category of the policy, or the sub-category of the policy receive details of the newly created policy (e.g., via email, policy export and subscriptions API 157, or the like). Each policy subscriber's subscriptions are updated as policies that are relevant to the policy subscriber are created. A policy subscriber's subscriptions may indicate whether a policy subscription has expired and/or a number of days remaining before the policy subscription expires.

In some instances, policy subscribers 180 receive policy subscription updates via pub-sub engine 177 of policy manager platform 140. Pub-sub engine 177 is a message server that is configured to process policy subscriptions and render policies asynchronously. Policy subscribers subscribe to policies of interest and pub-sub engine 177 monitors the subscription queue. If there are any changes to a subscribed policy, pub-sub engine 177 notifies the subscriber.

Policy manager platform 140 continuously monitors active policies, such as those stored in policy bank 173. An active policy may be updated via a process similar to that of defining a new policy. For example, policy author 150 elects, from the list of active policies, a policy to be updated. Policy author 150 accesses the metadata associated with the elected policies, such as the definition of the policy, and modifies the definition. The updated policy is submitted to policy approver 151 for approval. If policy approver 151 approves the updated policy, the status of the updated policy changes from "pending" to "active". The update is reflected within policy bank 173 and policy manager platform 140 uses at least policy export and subscriptions API 157 to alert subscribers of the policy update. In some instances, a policy may have one or more versions, where each version features one or more policy updates. Policy manager platform 140 is configured to support policy versioning, such that a policy that is associated with more than one version can revert to a last-known-good-policy version. In some instances, the last-known-good-policy version is identified by at least policy approver 151 and/or policy manager platform 140. A policy is reverted to the last-known-good version of the policy when the policy fails a performance test in either one of the non-production test environment or the consumer environment. Based on failing at least one test in either environment, the policy is reverted to the last known version of the policy that passed tests pertaining to business use cases of the specific tenant to which the policy belongs.

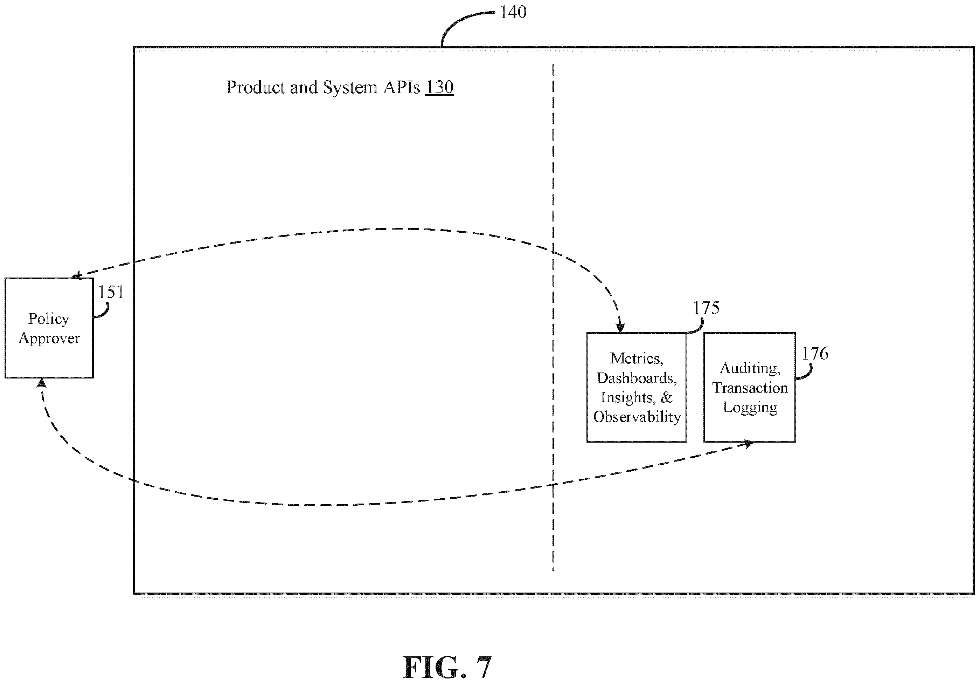

Further, policy manager platform 140 continuously monitors active policies, such as those within policy bank 173, to generate policy performance metrics. In some instances, policy approver 151 (or a team of policy approvers) monitors the active policies to generate and analyze the policy performance metrics. FIG. 7 illustrates an example interaction between a policy approver and the policy manager platform for cloud-based policy definition and enforcement. While FIG. 7 and the corresponding discussion describe policy approver 151 as analyzing the performance metrics, policy manager platform 140 may also be configured to conduct the analysis.

As illustrated in FIG. 7, policy approver 151 uses engines within policy manager platform 140 to further analyze the active policies when the active policies are released into production. In particular, policy approver 151 uses metrics, dashboards, insights, and observability engine 175 and auditing and transaction logging engine 176 to collect different analytics that indicate policy performance. The collected analytics include at least business analytics shared by policy manager platform 140. For example, where policy manager platform 140 is a runtime alkali environment of a OneStack runtime platform, the collected analytics include a number of platform and/or policy accesses, policy load times, platform load times, or the like. Additional analytics include analytics on policy creation, policy approval, policy subscriptions, API calls, API response times, or the like. The collected analytics are configured to interface with one or more APIs of policy manager platform 140 and are configured for integration with one or more tools that communicate with policy manager platform 140.

The collected analytics include, at least, product analytics and instance analytics. Product analytics drive the decision making around product roadmaps and tenant-specific features to be modified to enhance the user experience. For example, product analytics consider, for each product, service, and/or feature associated with the active policies, a level of adoption and usage, a health level, a consumer satisfaction (CSAT) score, and an analysis of policy usage across tenants. Instance analytics are used to generate insights on tenants. More specifically, instance analytics consider the implementation and usage of policies, policy users and their roles, policy users and their actions, search capabilities under a policy search service, and an analysis of policy changes and approvals.

Further, when the active policies are in production, the active policies are continuously measured against one or more key performance indicators (KPIs) associated with the active policies. The KPIs may include at least adoption metrics, usage metrics, and business impact metrics. The adoption metrics indicate at least a number of tenants within the multi-tenant cloud environment, a number of sub-tenants (also referred as functional groups), a number of users associated with each tenant and/or sub-tenant. The usage metrics indicate at least a number of policies configured (e.g., authored, approved, and enforced), a number of applications and/or tools that interface with policy manager platform 140, a number of events and/or rules that trigger each configured policy. The business impact metrics may differ for each tenant of the multi-tenant cloud environment. At least one of policy approver 151 or policy manager platform 140 evaluates each active policy's performance against the KPIs. Based on this evaluation, policy approver 151 and/or policy manager platform 140 determines how effective an active policy has been to enterprise organization goals, objectives, and/or business outcomes, and uses a feedback mechanism to revise the policy accordingly.

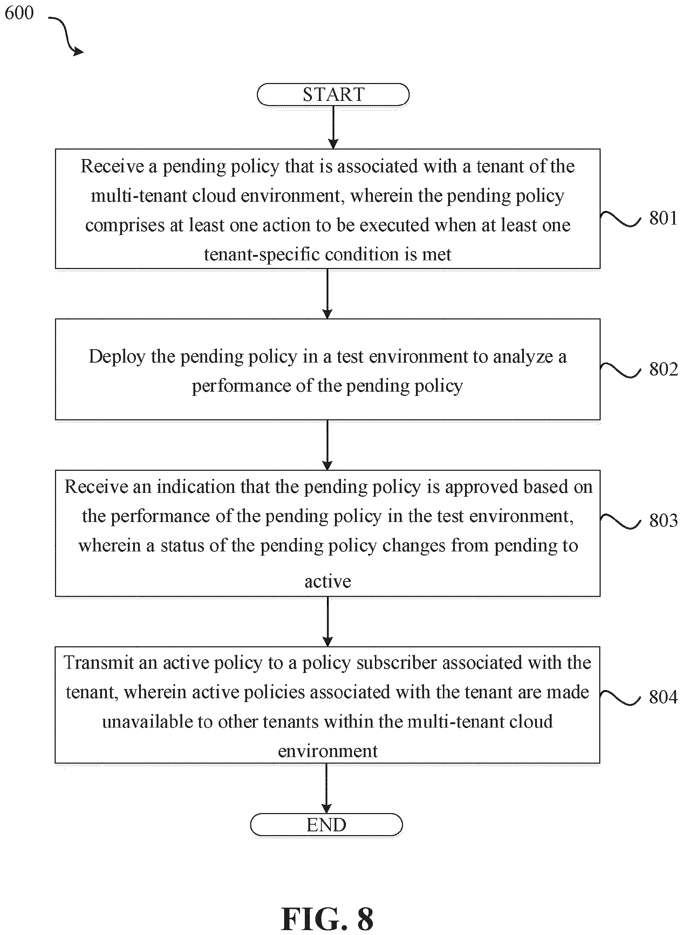

FIG. 8 illustrates a flow diagram for an example method for cloud-based policy definition and enforcement. The operations described herein are presented in the current order by way of example, and the order is not meant to be limiting. Moreover, operations may be omitted from or added to the example method.

At block 801, policy manager platform 140 receives a pending policy that is associated with a tenant of the multi-tenant cloud environment, wherein the pending policy comprises at least one action to be executed when at least one tenant-specific condition is met. Policy author 150 defines the pending policy and submits the pending policy to the policy manager platform for review. The pending policy consists of a policy definition, which includes at least a policy description, an effective date of the pending policy, an expiration date of the pending policy, at least one attribute associated with the pending policy, a category that corresponds to the pending policy, and a sub-category that corresponds to the pending policy.

At block 802, policy manager platform 140 deploys the pending policy in a test environment to analyze a performance of the pending policy. Policy manager platform 140 generates a non-production test environment based on policy approver 151 electing policy approval API 156 and/or based on policy approver 151 electing a policy for review. Policy manager platform 140 permits policy approver 151 to observe policy performance within the non-production test environment to determine whether to approve or reject the pending policy.

At block 803, policy manager platform 140 receives an indication that the pending policy is approved based on the performance of the pending policy in the test environment. In particular, policy manager platform 140 receives an indication that the state of the policy changed from "pending" to "active". Policy manager platform 140 updates policy subscriptions based on the newly activated policies.

At block 804, policy manager platform 140 transmits an active policy to a policy subscriber associated with the tenant, wherein active policies associated with the tenant are made unavailable to other tenants within the multi-tenant cloud environment. To do so, policy manager platform 140 uses at least policy export and subscription API 157 therein. Policy manager platform 140 updates current policy subscriptions based on the one or more changes to policy bank 173. In particular, policy manager platform 140 determines whether current subscribers are subscribed to at least a category of policies or a subcategory of policies to which one or more newly added policies also correspond. Based on determining current subscribers are subscribed to a category or subcategory of policies that was recently updated within policy bank 173, policy manager platform 140 makes the newly added policies available to the relevant portion of policy subscribers 180.

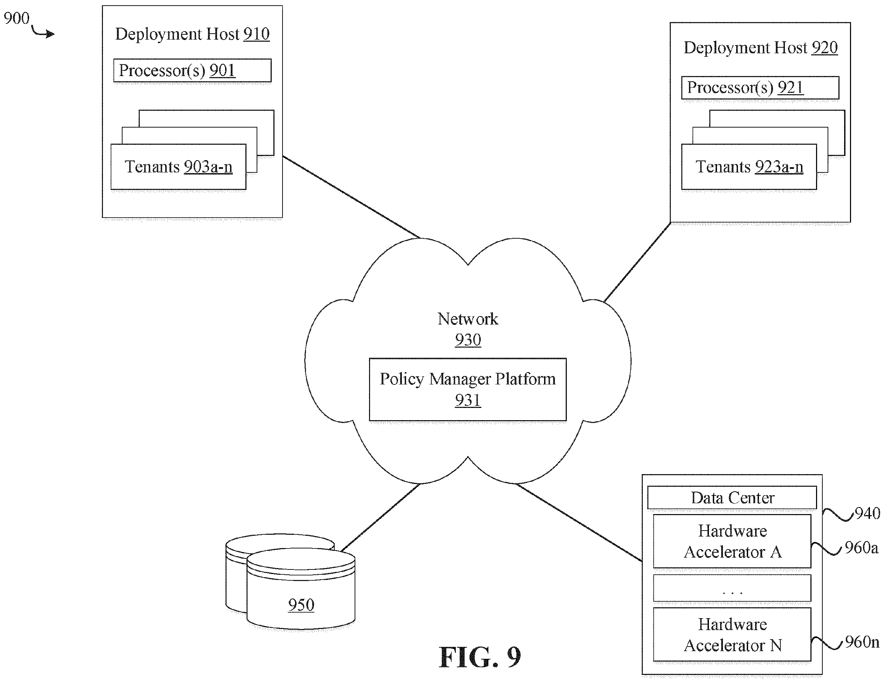

FIG. 9 illustrates a block diagram of an example computing environment for cloud-based policy definition and enforcement. Policy definition and approval is performed within one or more host computing environments that use one or more deployment hosts to communicate with computing devices that are configured to communicate with, at least, the policy manager platform. The policy manager is deployed in a cloud environment at runtime across one or more host computing environments. A deployment host hosts one or more computing devices that are associated with one or more tenants that communicate with network 930. A tenant is an enterprise organization or a policy category to which a policy belongs. In some instances, each tenant within the multi-tenant cloud environment is located in diverse geographic regions, but each communicates with the policy manager platform via associated deployment hosts.

Deployment host 910 and deployment host 920 are associated with respective host computing environments and each of deployment hosts 910 and 920 communicate with policy manager platform 931 that is hosted by network 930.

Deployment hosts 910 and 920 include one or more processors, such as processor(s) 901 and 921. Deployment hosts 910 and 920 host one or more computing devices that are associated with one or more tenants, such as tenants 903a-n and 923a-n, respectively. Each computing device includes one or more processors and memory. The memory includes instructions and data. Each computing device also includes user input and user output mechanisms.

The memory stores information accessible by the processors, including instructions that may be executed by the processors. The memory also includes data that may be read, retrieved, manipulated, or stored by the processors. The memory may be a type of non-transitory computer readable medium capable of storing information accessible by the processors, such as volatile and non-volatile memory. The processors may include one or more central processing units (CPUs), graphic processing units (GPUs), field-programmable gate arrays (FPGAs), and/or application-specific integrated circuits (ASICs), such as tensor processing units (TPUs).

The instructions include one or more instructions that, when executed by the processors, cause the one or more processors to perform actions defined by the instructions. The instructions may be stored in object code format for direct processing by the processors, or in other formats including interpretable scripts or collections of independent source code modules that are interpreted on demand or compiled in advance. The instructions include instructions for at least defining a policy, approving a pending policy, and/or enforcing an activated policy.

The data is read, retrieved, stored, or modified by the processors in accordance with the instructions. The data may be stored in computer registers, in a relational or non-relational database as a table having a plurality of different fields and records, or as JSON, YAML, proto, or XML documents. The data may also be formatted in a computer-readable format such as, but not limited to, binary values, ASCII, or Unicode. Moreover, the data may include information sufficient to identify relevant information, such as numbers, descriptive text, proprietary codes, pointers, references to data stored in other memories, including other network locations, or information that is used by a function to calculate relevant data.

Each computing device uses at least the user input and user output mechanisms to transmit communication to and receive communication from policy manager platform 931. User input mechanisms include any appropriate mechanism or technique for receiving input, such as keyboard, mouse, mechanical actuators, soft actuators, touchscreens, microphones, and sensors. In some instances, user input mechanisms may be used to receive notifications indicating whether a pending policy and/or a revised policy has been approved or rejected. Further, the user input mechanisms are used by at least policy author 150, policy approver 151, and instance administrator 170 associated with a tenant when defining, analyzing, and enforcing policies, respectively. The user input mechanisms are used to access the product and system APIs that are hosted by policy manager platform 931.

The user output mechanisms may be used to display parameters of one or more APIs that are used to author policies, approve policies, and/or enforce policies.

Network 930 is communicatively coupled to one or more storage devices over a network. The storage devices may be a combination of volatile and non-volatile memory and may be at the same or different physical locations than the computing devices. For example, the storage devices may include any type of non-transitory computer readable medium capable of storing information, such as a hard-drive, solid state drive, tape drive, optical storage, memory card, ROM, RAM, DVD, CD-ROM, write-capable, and read-only memories.

Although FIG. 9 illustrates the processors and the memories as being within the computing devices, components described herein can include multiple processors and memories that can operate in different physical locations and not within the same computing device. For example, some of the instructions and the data can be stored on a removable SD card and others within a read-only computer chip. Some or all of the instructions and data can be stored in a location physically remote from, yet still accessible by, the processors. Similarly, the processors can include a collection of processors that can perform concurrent and/or sequential operation. The computing devices can each include one or more internal clocks providing timing information, which can be used for time measurement for operations and programs run by the computing devices.

Deployment hosts 910 and 920 may be connected over network 930 to a data center housing any number of hardware accelerators, such as data center 940 housing hardware accelerators 960a-960n. Data center 940 can be one of multiple data centers or other facilities in which various types of computing devices, such as hardware accelerators, are located. Computing resources housed in the data center can be specified for cloud-based policy definition and enforcement, as described herein.

The policies that are associated with each of tenants 903a-n and/or 923a-n of the multi-tenant cloud environment are stored in database 950. In some instances, environment 900 includes additional databases to store metadata that corresponds to each policy stored in database 950.

Deployments hosts 910 and 920 and data center 940 may be capable of direct and indirect communication over network 930. For example, using a network socket, at least one of deployments hosts 910 and 920 can connect to a service operating in data center 940 through an Internet protocol. Deployment hosts 910 and 920 may set up listening sockets that accept an initiating connection for sending and receiving information. Network 930 itself may include various configurations and protocols including the Internet, World Wide Web, intranets, virtual private networks, wide area networks, local networks, and private networks using communication protocols proprietary to one or more companies. Network 930 may support a variety of short- and long-range connections. The short- and long-range connections may be made over different bandwidths, such as 2.402 GHz to 2.480 GHz, commonly associated with the Bluetooth^{®} standard, 2.4 GHz and 5 GHz, commonly associated with the Wi-Fi^{®} communication protocol; or with a variety of communication standards, such as the LTE^{®} standard for wireless broadband communication. Network 930 may, in addition or alternatively, also support wired connections between the devices and the data center, including over various types of Ethernet connection.

It is understood that the aspects of the disclosure may be implemented according to a variety of different configurations and quantities of computing devices, including in paradigms for sequential or parallel processing, or over a distributed network of multiple devices.

The foregoing aspects of this technology offer a policy manager platform that provides a streamlined process for generating tenant-specific policies, storing the policies, and propagating policies to subscribers associated with a tenant. The policy manager platform increases the accessibility of policies across subscribers within a tenant and increases the visibility of policies.

Aspects of the disclosed technology may take the form of a method, process, apparatus, system, or policy manager platform for implementing policies within a multi-tenant cloud environment. Those examples may include one or more of the following features (e.g., F1 through F20):
F1. A method for implementing policies within a multi-tenant cloud environment, the method comprising:
   receiving, by a policy manager platform, a pending policy that is associated with a tenant of the multi-tenant cloud environment, wherein the pending policy comprises at least one action to be executed when at least one tenant-specific condition is met;
   deploying the pending policy in a test environment to analyze a performance of the pending policy;
   receiving an indication that the pending policy is approved based on the performance of the pending policy in the test environment, wherein a status of the pending policy changes from pending to active; and
   transmitting an active policy to a policy subscriber associated with the tenant, wherein active policies associated with the tenant are made unavailable to other tenants within the multi-tenant cloud environment.
F2. The method of F1, wherein receiving the pending policy comprises receiving a policy definition, wherein the policy definition comprises at least one of:
   a policy description;
   an effective date of the pending policy;
   an expiration date of the pending policy;
   at least one attribute associated with the pending policy;
   a category that corresponds to the pending policy; or
   a sub-category that corresponds to the pending policy.
F3. The method of any one of F1 to F2, wherein the test environment is a non-production test environment for testing the pending policy.
F4. The method of any one of F1 to F3, further comprising:
   generating a prototype of the pending policy;
   exporting the prototype in a subscriber environment for testing; and
   monitoring the performance of the pending policy in the subscriber environment.
F5. The method of any one of F1 to F4, further comprising storing the active policy in a scalable database, wherein active policies associated with the tenant are made available to the policy subscriber.
F6. The method of any one of F1 to F5, further comprising updating the active policy based on approving one or more updates to the active policy.
F7. The method of any one of F1 to F6, wherein updating the active policy comprises updating a scalable database where the active policy is stored.
F8. The method of any one of F1 to F7, further comprising transmitting, to the policy subscriber, updates to the active policy.
F9. The method of any one of F1 to F8, further comprising managing requests from users within the tenant to subscribe to one or more active policies associated with the tenant.
F10. The method of any one of F1 to F9, wherein the active policy is transmitted to the policy subscriber associated with the tenant via at least one of an application programming interface (API), an email, or a config transfer mechanism.
F11. The method of any one of F1 to F10, further comprising receiving a request from the policy subscriber to search for a particular active policy, wherein the request includes at least one component of a policy definition.
F12. The method of any one of F1 to F11, further comprising preventing duplicate policy creation based on flagging the pending policy when a metadata mapping associated with the pending policy is the same as a metadata mapping associated with the active policy.
F13. The method of any one of F1 to F12, further comprising reverting the active policy to a previous version of the active policy based on the active policy failing at least one performance test while deployed in the test environment.
F14. A policy manager platform for implementing policies within a multi-tenant cloud environment, the policy manager platform comprising one or more processors configured to:
   receive a pending policy that is associated with a tenant of the multi-tenant cloud environment, wherein the pending policy comprises at least one action to be executed when at least one tenant-specific condition is met;
   deploy the pending policy in a test environment to analyze a performance of the pending policy;
   receive an indication that the pending policy is approved based on the performance of the pending policy in the test environment, wherein a status of the pending policy changes from pending to active; and
   transmit an active policy to a policy subscriber associated with the tenant, wherein active policies associated with the tenant are made unavailable to other tenants within the multi-tenant cloud environment.
F15. The policy manager platform of F14, wherein the one or more processors are further configured to:
   generate a prototype of the pending policy;
   export the prototype in a subscriber environment for testing; and monitor the performance of the pending policy in the subscriber environment.
F16. The policy manager platform of any one of F14 to F15, wherein the one or more processors are further configured to prevent duplicate policy creation based on flagging the pending policy when a metadata mapping associated with the pending policy is the same as a metadata mapping associated with the active policy.
F17. The policy manager platform of any one of F14 to F16, wherein the one or more processors are further configured to revert the active policy to a previous version of the active policy.
F18. A non-transitory computer readable storage medium storing instructions that, when executed by one or more processors for implementing policies within a multi-tenant cloud environment, cause the one or more processors to:
   receive a pending policy that is associated with a tenant of the multi-tenant cloud environment, wherein the pending policy comprises at least one action to be executed when at least one tenant-specific condition is met;
   deploy the pending policy in a test environment to analyze a performance of the pending policy;
   receive an indication that the pending policy is approved based on the performance of the pending policy in the test environment, wherein a status of the pending policy changes from pending to active; and
   transmit an active policy to a policy subscriber associated with the tenant, wherein active policies associated with the tenant are made unavailable to other tenants within the multi-tenant cloud environment.
F19. The non-transitory computer readable storage medium of F18, wherein receiving the pending policy causes the one or more processors to receive a policy definition, wherein the policy definition comprises at least one of:
   a policy description;
   an effective date of the pending policy;
   an expiration date of the pending policy;
   at least one attribute associated with the pending policy;
   a category that corresponds to the pending policy; or
   a sub-category that corresponds to the pending policy.
F20. The non-transitory computer readable storage medium of any one of F18 to F19, wherein the test environment is a non-production test environment for testing the pending policy.

Aspects of this disclosure can be implemented in digital electronic circuitry, in tangibly-embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus.

The term "configured" is used herein in connection with systems and computer program components. For a system of one or more computers to be configured to perform particular operations or actions means that the system has installed on it software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components, or can be installed on one or more computers in one or more locations. A particular engine can have one or more computers dedicated thereto, or multiple engines can be installed and running on the same computer or computers.

The processes and logic flows described herein can be performed by one or more computers or special purpose logic circuitry, such as a system on chip (SoC) executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back-end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the implementations should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A method for implementing policies within a multi-tenant cloud environment, the method comprising:
receiving, by a policy manager platform, a pending policy that is associated with a tenant of the multi-tenant cloud environment, wherein the pending policy comprises at least one action to be executed when at least one tenant-specific condition is met;
deploying the pending policy in a test environment to analyze a performance of the pending policy;
receiving an indication that the pending policy is approved based on the performance of the pending policy in the test environment, wherein a status of the pending policy changes from pending to active; and
transmitting an active policy to a policy subscriber associated with the tenant, wherein active policies associated with the tenant are made unavailable to other tenants within the multi-tenant cloud environment.

2. The method of claim 1, wherein receiving the pending policy comprises receiving a policy definition, wherein the policy definition comprises at least one of:
a policy description;
an effective date of the pending policy;
an expiration date of the pending policy;
at least one attribute associated with the pending policy;
a category that corresponds to the pending policy; or
a sub-category that corresponds to the pending policy.

3. The method of claim 1 or 2, wherein the test environment is a non-production test environment for testing the pending policy.

4. The method of one of claims 1 to 3, further comprising:
generating a prototype of the pending policy;
exporting the prototype in a subscriber environment for testing; and
monitoring the performance of the pending policy in the subscriber environment.

5. The method of one of claims 1 to 4, further comprising storing the active policy in a scalable database, wherein active policies associated with the tenant are made available to the policy subscriber.

6. The method of claim 1, further comprising updating the active policy based on approving one or more updates to the active policy;
wherein, optionally, updating the active policy comprises updating a scalable database where the active policy is stored; and/or
the method, optionally, further comprising transmitting, to the policy subscriber, updates to the active policy.

7. The method of one of claims 1 to 6, further comprising managing requests from users within the tenant to subscribe to one or more active policies associated with the tenant.

8. The method of one of claims 1 to 7, wherein the active policy is transmitted to the policy subscriber associated with the tenant via at least one of an application programming interface, API, an email, or a config transfer mechanism.

9. The method of one of claims 1 to 8, further comprising one or more of:
receiving a request from the policy subscriber to search for a particular active policy, wherein the request includes at least one component of a policy definition;
preventing duplicate policy creation based on flagging the pending policy when a metadata mapping associated with the pending policy is the same as a metadata mapping associated with the active policy; and
reverting the active policy to a previous version of the active policy based on the active policy failing at least one performance test while deployed in the test environment.

10. A policy manager platform for implementing policies within a multi-tenant cloud environment, the policy manager platform comprising one or more processors configured to:
receive a pending policy that is associated with a tenant of the multi-tenant cloud environment, wherein the pending policy comprises at least one action to be executed when at least one tenant-specific condition is met;
deploy the pending policy in a test environment to analyze a performance of the pending policy;
receive an indication that the pending policy is approved based on the performance of the pending policy in the test environment, wherein a status of the pending policy changes from pending to active; and
transmit an active policy to a policy subscriber associated with the tenant, wherein active policies associated with the tenant are made unavailable to other tenants within the multi-tenant cloud environment.

11. The policy manager platform of claim 10, wherein the one or more processors are further configured to:
generate a prototype of the pending policy;
export the prototype in a subscriber environment for testing; and
monitor the performance of the pending policy in the subscriber environment.

12. The policy manager platform of claim 10 or 11, wherein the one or more processors are further configured to:
prevent duplicate policy creation based on flagging the pending policy when a metadata mapping associated with the pending policy is the same as a metadata mapping associated with the active policy.

13. The policy manager platform of one of claims 10 to 12, wherein the one or more processors are further configured to revert the active policy to a previous version of the active policy.

14. A non-transitory computer readable storage medium storing instructions that, when executed by one or more processors for implementing policies within a multi-tenant cloud environment, cause the one or more processors to:
receive a pending policy that is associated with a tenant of the multi-tenant cloud environment, wherein the pending policy comprises at least one action to be executed when at least one tenant-specific condition is met;
deploy the pending policy in a test environment to analyze a performance of the pending policy;
receive an indication that the pending policy is approved based on the performance of the pending policy in the test environment, wherein a status of the pending policy changes from pending to active; and
transmit an active policy to a policy subscriber associated with the tenant, wherein active policies associated with the tenant are made unavailable to other tenants within the multi-tenant cloud environment.

15. The non-transitory computer readable storage medium of claim 14, wherein receiving the pending policy causes the one or more processors to receive a policy definition, wherein the policy definition comprises at least one of:
a policy description;
an effective date of the pending policy;
an expiration date of the pending policy;
at least one attribute associated with the pending policy;
a category that corresponds to the pending policy; or
a sub-category that corresponds to the pending policy:
wherein, optionally, the test environment is a non-production test environment for testing the pending policy.
